# EUROPEAN PATENT APPLICATION

(11) **EP 1 431 933 A1**
(43) Date of publication of application: **23.06.2004**
(21) Application number: 03028673.6
(22) Date of filing: 16.12.2003
(51) Int. Cl.: G07F 7/02, G07F 17/32

(54) **Service payment system in hotel with casino**

(30) Priority: 16.12.2002 JP 2002364495
(71) Applicant: Aruze Corp., Tokyo 135-0063 (JP)
(72) Inventor: Fujimoto, Jun, Tokyo 135-0063 (JP)
(74) Representative: HOFFMANN - EITLE

(57) **Abstract**

In the present invention, in a hotel installed with a casino, a house card stored with user information enabling identi fication of a user is issued, a casino deposit enabling the user to utilize casino services upon acquirement of the house card is managed using the user information, and when usage restriction conditions placed on the casino deposit are satisfied, service data indicating use of the casino services by the user are outputted, these service data enabling payment for the casino services to be performed for each user individually. As a result, hotel services and casino services in the hotel with a casino are integrated, enabling payment for all of the services in the hotel with a casino to be performed using a single house card.

## Description

### BACKGROUND OF THE INVENTION

### Field of the Invention

The present invention relates to a service payment system for making overall management of and payment for various services provided in a hotel in which a casino is installed (to be referred to as "a hotel with a casino" below).

### Related Background Art

Systems are known in which guests in a hotel are provided with a card (here, the term "card" includes an optical card, a magnetic card, an IC card, and so on, and includes various systems such as contact/non-contact types or a recordable type) on which a variety of information is recorded, and this card is used to settle accounts and so on. In Japanese Unexamined Patent Application Publication 2002-123619, for example, a system is disclosed in which guests are provided with a guest card inputted with the content of an entry made upon check-in, whereupon various services (a function as a room key, cashless shopping, special menu services in a restaurant, and so on) are provided on the basis of the content stored on the guest card. The purchasing history and so on of the guest within the hotel is stored on the guest card, and this is used to settle the account upon check-out.

In casinos, meanwhile, systems (player trace systems: PTS) for managing the actions of players bymaking the players carry a card are becoming common, and technology enabling cashless account settlement using various cards such as credit cards instead of cash are gradually increasing in usage. In Japanese Unexamined Patent Application Publication H8-180115, for example, a system in which a credit card is used to play a game without cash is disclosed (see paragraph [0038] and so on).

As described above, conventional systems enabling cashless account settlement using a card are known in relation to services provided inhotels and services provided in casinos respectively.

In cities such as Las Vegas, hotels and casinos often provide integrated services. Under current circumstances, however, the hotel system and casino system in such hotels (hotels with casinos) are independent of each other. This is because there is a danger that problems would arise if the account settlement system in the hotel, such as the system disclosed in Japanese Unexamined Patent Application Publication 2002-123619, were to be used as is in the casino.

If a conventionally known hotel account settlement system is applied to a casino and payments by card are performed in the casino, unpredicted damage may occur. For example, if a game is played in the casino using a hotel house card, the player may use the house card without limit, and as a result of this unlimited use, the player may be unable to pay when the time comes to settle his/her account during check-out or the like.

When the casino and hotel systems are independent, the information in each system cannot be shared. Hence detailed services enabled by sharing the information in both systems cannot be provided to casino users and hotel guests. Problems also arise regarding convenience since the casino user or hotel guest must carry a plurality of cards, that is a casino card and a hotel card, present a different card for each service, and so on.

### SUMMARY OF THE INVENTION

The present invention has been designed in order to solve the problems described above, and it is an object thereof to provide a service payment system for integrating hotel side services and casino side services in a hotel with a casino such that a casino user or hotel guest need to only carry a single card to receive and pay for all of the services provided in the hotel with a casino.

In order to solve the problems described above, the present invention is a service payment system for making payment for services provided in a hotel in which a casino is installed, comprising house card issuingmeans for issuing a house card which stores user information enabling identification of a user of these services, a house card server for instructing the house card issuing means to issue a house card, and a service management server for utilizing the user information to manage a casino deposit which enables the user to utilize casino services upon acquirement of the house card, and for outputting service data indicating use of the casino services by the user when usage restriction conditions placed on the casino services are satisfied, wherein the house card server stores the service data outputted from the service management server, thus enabling payment for the casino services to be performed individually for each user.

The service management server described above is capable of determining usage restriction conditions according to the presence or absence of a deposit balance indicating the amount of money remaining in the casino deposit.

The present invention alsoprovides a service payment system for making payment for services provided in a hotel in which a casino is installed, comprising house card issuing means for issuing a house card which stores user information enabling identification of a user of these services and deposit data indicating a deposit which enables the user to utilize the services, means which, when the user utilizes casino services, update the deposit data stored on the house card and output service data indicating use of the casino services by the user, and a house card server which stores the service data outputted from the aforementioned means, thus enabling payment for casino services to be performed individually for each of user.

This service payment system preferably further comprises means for restricting use of the casino services by the user when the deposit balance indicating the amount of money remaining in the casino deposit has reached zero.

The present invention will be more fully understood from the detailed description given hereinbelow and the accompanying drawings which are given by way of illustration only, and thus are not to be considered as limiting the present invention.

### BRIEF DESCRIPTION OF THE DRAWINGS

Fig. 1 is a block diagram showing the overall system constitution of a service payment system in a hotel with a casino according to an embodiment of the present invention;
Fig. 2 is a sequence diagram showing an operating sequence of the service payment system when a service is utilized using a house card;
Fig. 3 is a sequence diagram showing an operating sequence of the service payment system when a casino service is utilized under the management of a casino deposit management server; and
Fig. 4 is a sequence diagram showing an operating sequence when the house card is used to issue chips or settle a chip transaction.

### DESCRIPTION OF THE PREFERRED EMBODIMENTS

An embodiment of a service payment system according to the present invention will be described below with reference to the drawings. Note that identical reference symbols have been used for identical elements, and duplicate description thereof has been omitted.

In the following description, the term "service" includes typical services provided within a hotel (for example, room service, services received in restaurants, bars, shops, and so on, to be referred to below as "hotel services"), and also services provided in a casino (for example services in which predetermined dividends are obtained after winning a game on which money has been gambled such as a slot machine, card games, roulette, and so on, to be referred to below as "casino services").

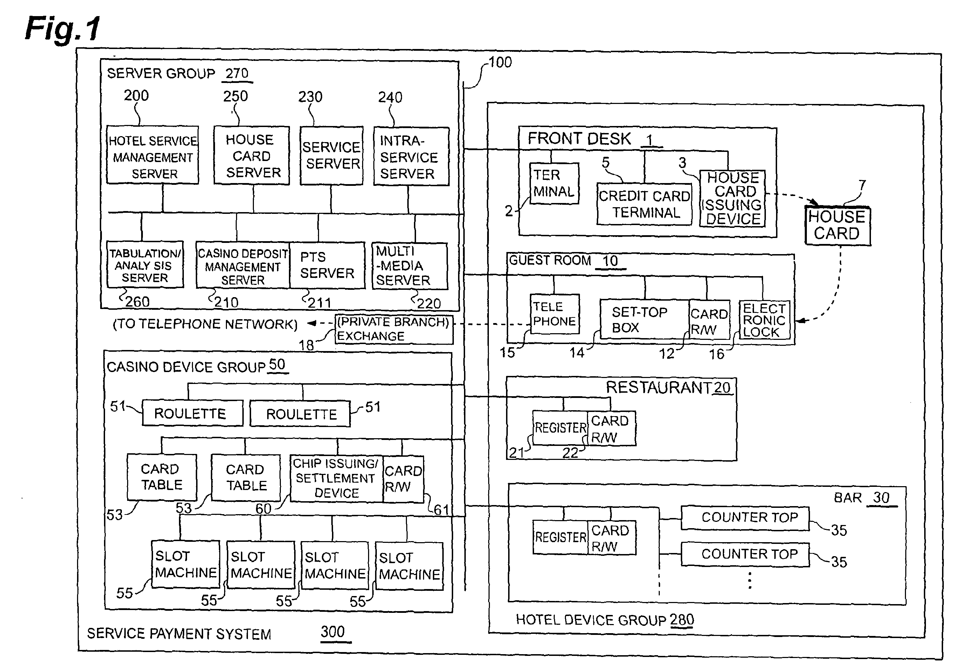

First, the overall system constitution of the service payment system will be described with reference to the block diagram in Fig. 1.

A service payment system 300 is constituted so as to be applicable to a hotel with a casino. The service payment system 300 is constituted such that a server group 270, a plurality of devices installed in a hotel (to be referred to as "hotel device group" below) 280, and a plurality of devices installed in a casino (to be referred to as "casino device group" below) 50 are connected to a communication network 100.

The server group 270 comprises a hotel service management server 200, a casino deposit management server 210, an action history management (player trace system: PTS) server 211, a multi-media server 220, a service server 230, an intra-service server 240, a house card server 250, and a tabulation/analysis server 260.

The hotel device group 280 comprises a plurality of devices installed on a front desk 1, a plurality of devices installed in at least one guest room10, apluralityof devices installed in a restaurant 20, and a plurality of devices installed in a bar 30.

A terminal 2, a house card issuing device 3 for issuing a house card 7, and a credit card terminal 5 are installed on the front desk 1. A card reader 12, a set-top box 14, a telephone 15, and an electronic door lock 16 are installed in each of the guest rooms 10. The telephone 15 installed inside the guest room 10 is connected to an exchange 18 to enable communicating with telephones not shown in the drawing inside and outside the hotel and casino via a telephone network also not shown.

A register 21 and a card reader 22 are installed in the restaurant 20. A register 31, a card reader 32, and a plurality of countertops 35 comprising card readers are installed in the bar 30.

The casino device group 50 comprises a plurality of roulette wheels 51, a plurality of card tables 53, and a plurality of slot machines 55, and as well as these game devices, a chip issuing/settlement device 60 and a card reader 61.

### (Communication network 100)

The service payment system 300 according to this embodiment is constituted such that the various devices constituting the server group 270, the hotel device group 280, and the casino device group 50 are capable of communication via the communication network 100. The communication network 100 maybe wired or wireless, a private line or a public line, and is constituted such that when the devices constituting the server group 270, the hotel device group 280, and the casino device group 50 are connected and a session is established between respective target devices, information can be transmitted and received therebetween.

The communication network 100 may be constituted by a plurality of networks connected via a gateway, such as the Internet. For example, the communication network 100 may be constituted by providing a first local area network (LAN) comprising the hotel service management server 200, house card server 250, service server 230, intra-service server 240, multi-media server 220, and the hotel device group 280, and a second local area network comprising the casino deposit management server 210, PTS server 211, tabulation/analysis server 260, and the casino device group, and connecting the first and second local area networks via a gateway. This connection may take any form as long as information transmission and reception are enabled between two points when a session is established. For example, the connection may be made temporarily using a PPP (Point to Point Protocol) connection or the like instead of a direct connection to a so-called "back-bone" trunk line. Note that the term "communication network" includes a communication network which does not use an exchange such as one in which private lines are fixedly connected.

### (Server group)

Each of the servers 200-260 constituting the server group 270 is an information processing device such as a computer or work station comprising a central processing unit (CPU), main memory (RAM: random access memory), read-only memory (ROM), an input/output interface (I/O), and an auxiliary storage device such as a hard disk device. A program for causing each of the information processing devices to function as the respective servers 200-260 is stored in the ROM or auxiliary storage device of each information processing device, and by executing this program on the respective CPUs, the servers 200-260 are realized. Note that the program executed by the CPU does not have to be stored on a storage device inside the information processing device at all times, and may be provided from an external device (for example the server of an ASP (application service provider) or the like) and downloaded into the main memory.

### (Hotel service management server)

The hotel service management server 200 comprises the functions of receiving hotel reservations and the like, performing check-in, check-out, and so on for guests staying at the hotel, and performing general management of the hotel enterprises within the hotel.

### (Casino deposit management server)

The casino deposit management server 210 comprises means for monitoring usage of the casino deposits, to be described below, of the people who utilize the casino services (users), and managing the casino deposits for each user. The casino deposit management server 210 receives casino deposits, issues chips following payment from a casino deposit, transfers monetary amounts when chips are cashed (cashed chip amounts) into casino deposits, and settles casino deposits. The casino deposit management server 210 also comprises means for restricting use of casino services by each user on the basis of usage restriction conditions placed on the casino deposits managed by each user.

### (Actionhistorymanagement (player trace system (PTS)) server)

The PTS server 211 comprises a function for accumulating and managing the movement history, service utilization history, and action history of users and the like on the basis of requests to use the house card 7 transmitted from each of the card readers. Data indicating these accumulated histories are used in data mining and the like such as study and analysis of customer action patterns by the tabulation/analysis server 260.

### (Multi-media server)

The multi-media server 220 comprises a function for transmitting digital content data constituting a movie, music, or the like through the communication network 100 to the set-top box 14 in accordance with a request from the set-top box 14 inside the guest room 10. Having received the digital content data, the set-top box 14 reproduces the digital content data as a movie, music, and so on using a monitor (not shown) or the like in the guest room. Thus a guest is able to enjoy digital content such as movies, music, and so on within the guest room 10.

### (Service server)

The service server 230 comprises a function for handling reservations for events such as shows, matches, and so on that are held within or outside of the hotel, issuance of reserved tickets, and so on. When a guest specifies an event from the set-top box 14 in the guest room 10 and transmits a reservation request, the service server 230 determines whether or not a reservation is possible, and if a reservation is possible, performs processing to issue a ticket and the like.

### (Intra-service server)

The intra-service server 240 comprises a function for transmitting data (to be referred to as "game data" below) for an intranet casino within the hotel (a slot machine game, a card game (poker, black jack, and the like), or similar) or an intranet game (a so-called TV game) via the communication network 100 to the set-top box 14 in accordance with a request from the set-top box 14 in the guest room 10. Having received the game data, the set-top box 14 uses the game data to enable execution of the game through the monitor (not shown) in the guest room. As a result, the guest may enjoy games in the guest room 10.

Note that when a guest plays an intra-casino game, data indicating the usage fee for the game, bets, and prize money for winning the game may be used by the intra-service server 240 to place a request with the casino deposit management server 210 to make a withdrawal from or add to the casino deposit.

### (House card server)

The house card server 250 comprises means for instructing the house card issuing device 3 to issue a house card 7 and managing house card usage such as suspending and reactivating use of the house card 7 and so on, and means for managing personal accounts within the hotel. The house card server 250 also receives and stores data indicating the cost of goods purchased or services utilized using the house card 7. Note that the house card 7 functions to store information such as user information for identifying a user, and is used for personal identification and payments within a predetermined range (for example, within the hotel or the like). It is assumed that an object which does not take the form of a card may also correspond to the house card 7 as long as it exhibits the functions described above.

The house card server 250 and deposit management server 210 perform the following processing in relation to deposits (to be referred to as "casino deposits" below) used by casino users (when a casino user lodges at the hotel, s/he becomes a "guest") for casino services provided mainly within the casino such as the purchase of chips in the casino. On the basis of a deposit request from a user, the house card server 250 stores data indicating a specified usage amount to be used from the casino deposit as a service usage amount. The deposit management server 210 manages the casino deposit of each user by updating the deposit balance, which indicates the upper limit to be used for casino services, using the data indicating the specified usage amount.

When these casino services are to be provided, the casino deposit management server 210 manages the casino deposit of each user in real time, and restricts use of casino services on the basis of usage restriction conditions placed on the casino deposit. For example, when it is detected that the deposit balance has reached zero, control is performed such that the user of the deposit cannot receive casino services. Usage restriction conditions may also be set according to whether or not use of the accumulated deposit over a predetermined time period has exceeded an upper limit.

### (Hotel device group)

On the front desk 1, the house card issuing device 3 and credit card terminal 5 are connected via the terminal 2 which is connected to the communication network 100. The house card issuing device 3 is constituted so as to issue each guest with a house card 7 upon reception of an issuance instruction from the house card server 250. Information enabling identification of each guest, or in other words the user information of the present invention (this information will be referred to as "ID information" below) is recorded on the house card 7. In addition to the ID information, basic information such as the name, address, and length of stay of each guest, as well as personal information such as interests and preferences may also be recorded on the house card 7 (the information stored on the house card 7 will be referred to as "card information" below). This card information is managed by the house card server 250 which is connected to the communication network 100.

The house card 7 doubles as a guest room key for locking the guest room 10 used by a guest by activating an electronic door lock 16, and hence the hotel gives or lends a house card 7 to every guest. Thus each guest in the hotel possesses a house card 7 on which house card information is stored. A function for storing a code number or the like determined by the guest is preferably added to each house card 7. In so doing, when the guest pays for goods purchased or services utilized, the guest can be verified not only by presenting the house card, but also by inputting the code number or the like. Thus security can be heightened during payment.

When a guest obtains the house card 7, data (to be referred to as "deposit data" below) indicating a deposit for utilizing various services may be inputted into the casino deposit management server 210 as a deposit for utilizing hotel services and a deposit for utilizing casino services. The house card 7 is issued when deposit data are inputted into the casino deposit management server 210, but the guest may only utilize casino services within the range of the deposit balance indicated by the deposit data. By inputting deposit data, the amount of money that may be used on casino services is determined for each user.

When a guest obtains the house card 7, a desired monetary amount is deposited to the hotel side in cash or using a debit card or credit card. Deposit data corresponding to the amount of money deposited are then transmitted to the casino deposit management server 210 which is connected to the communication network 100. The casino deposit management server 210 manages the inputted deposit data using the ID information. A guest may increase the deposit after obtaining the house card 7 by making an additional deposit. Note that the deposit may be prepaid at times other than when the house card is issued by a similar method using the registers installed in various locations in the hotel (the restaurant 20, bar 30, and so on).

The card reader 12 (which may have a write function as well as a read function, as may the other card readers) is installed in the guest room 10. The card reader 12 reads the card information stored on the house card 7, and transmits the read card information to the server group 270. As a result, the guest may utilize various services. Note that here, examples of the services which may be used include services performed using the set-top box 14 such as video-on-demand, game-on-demand, room service, requests for various in-hotel services (participation in shows and events), settlement of hotel fees, use of the telephone 15, Internet access, locking of the door using the electronic door lock 16, and so on, for example. These services (primarilyhotel services) will be described in detail below, and are provided by causing the card reader 12 to read the card information.

When services are to be utilized, the card information is read by the card reader 12, and data (to be referred to as "service data" below) indicating the amount of money required to utilize the provided service are transmitted to the house card server 250. Having received the service data, the house card server 250 stores the service data and manages the service usage amount and so on for each user. Distribution to each of the guest rooms 10 of videos, games, or other content corresponding to the service provision is performed by the multi-media server 220, whereas reservations and ticket issuance for shows or events are performed by the service server 230.

Casino services may also be provided within the guest room 10 (for example, participation in a card game or roulette in real time using image capturing means installed in the casino), and participation in casino activities may be enabled via a TV game. These casino services (to be referred to as "guest room casino services" below) are performed through the intra-service server 240. Note that when these guest room casino services are utilized, the service data indicating the usage amount for the services may be managed by the casino deposit management server 210 similarly to casino services in the casino to be described below.

In the restaurant 20, the card reader 22 is installed side by side with the register 21. The card reader 22 is provided in order to read the card information and enable cashless settlement for services utilized by a guest. The card information and service data of each guest are transmitted to the house card server 250, where the service usage amount and so on for each guest are managed.

In the bar 30, similarly to the restaurant 20; the card reader 32 is installed side by side with the register 31. The card reader 32 is provided in order to read the card information and enable cashless settlement for services utilized by a guest. The card information and service data of each guest are transmitted to the house card server 250, where the service usage amount and so on for each guest are managed.

The counter tops 35 are provided so that a user may utilize casino services such as card games in the bar 30. Note that deposits for utilizing casino services in the bar 30 are managed by the casino deposit management server 210.

### (Casino device group)

The roulette wheels 51, card tables 53, and slot machines 55 constituting the casino device group 50 are all installed with a card reader (not shown). Deposits before utilizing casino services and deposits after utilizing casino services are managed by the casino deposit management server 210. The chip issuing/settlement device 60 executes operations for issuing chips within the range of the deposit balance and settling accounts via the card reader 61.

Note that the PTS server 211 may be used in conj unction with the casino depositmanagement server 210 described above to manage the action patterns of each player (the movement history and service usage history of a user), the amount of money and time spent at each playing area, and so on. By performing such management, the preferences and action patterns of a user may be understood and used in staff deployment management, the provision of detailed services within the casino, and so on. Note that the PTS server 211 may be used to manage the action history within the entire hotel rather than the casino alone.

In the hotel, a user may opens a personal account in order to accumulate funds relating to casino use and the like. In this case, the house card server 250 manages information relating to the opened personal account. Further, the usage conditions (goods purchased, preferred items, and so on) at each service provision location may be analyzed by the tabulation/analysis server 260. In so doing, finely detailed services may be provided throughout the entire hotel.

### (Examples of the operations of the service payment system)

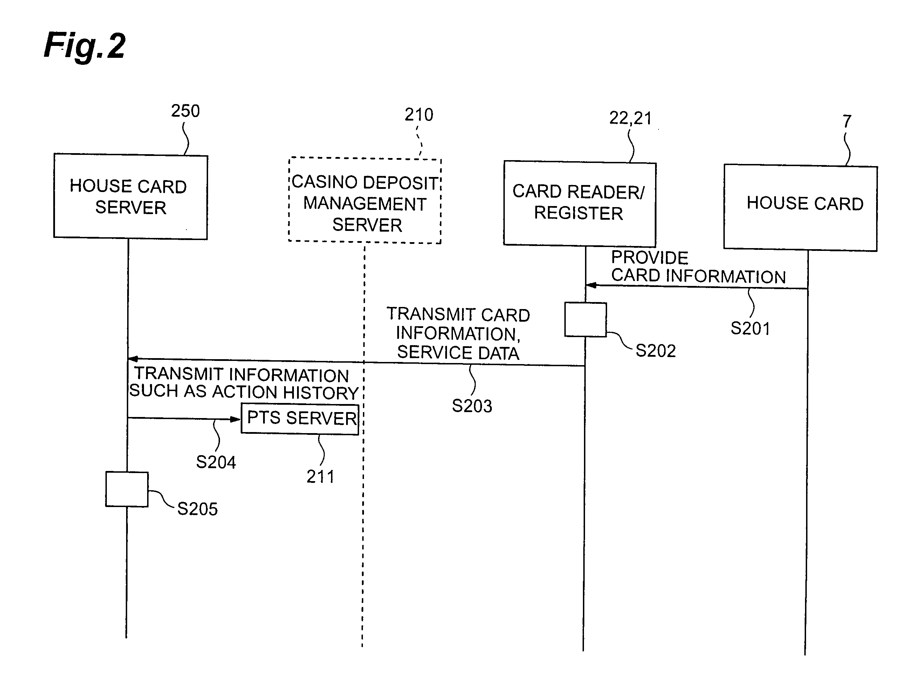

Next, examples of the operations of the service payment system described above will be described with reference to the sequence diagrams in Figs. 2 through 4 together with the action patterns of a guest (service user).

### (Example of operations performed when a guest purchases goods or utilizes services using the house card)

Fig. 2 is a sequence diagram showing an operating sequence performed when a guest utilizes a service within the hotel using the house card.

When a guest uses the house card 7 to make use of in-hotel services (in the following description, hotel services provided in the restaurant 20 or bar 30 are envisaged), the house card 7 of the guest is read by the card readers 22, 32. As a result, the card information stored on the house card 7 is inputted into the card readers 22, 32 (step S201). Meanwhile, service data indicating the service usage amount are inputted into the register 21, 31 (step S202). The register 21, 31 transmits the card information received from the card readers 22, 32 together with the service data to the house card server 250 via the communication network 100 (step S203). Having received these data, the house card server 250 transmits the information to the PTS server 211, thus enabling the action history and purchasing history of the guest to be recorded (step S204). The house card server 250 also stores the service data relating to the service usage amount used by the guest (step S205) in preparation for account settlement to be performed during check-out or the like. Hence by introducing the service payment system 300, cashless settlement may be performed in the hotel with a casino using the house card 7.

### (Example of operations performed when casino services are utilized under management of the casino deposit management server)

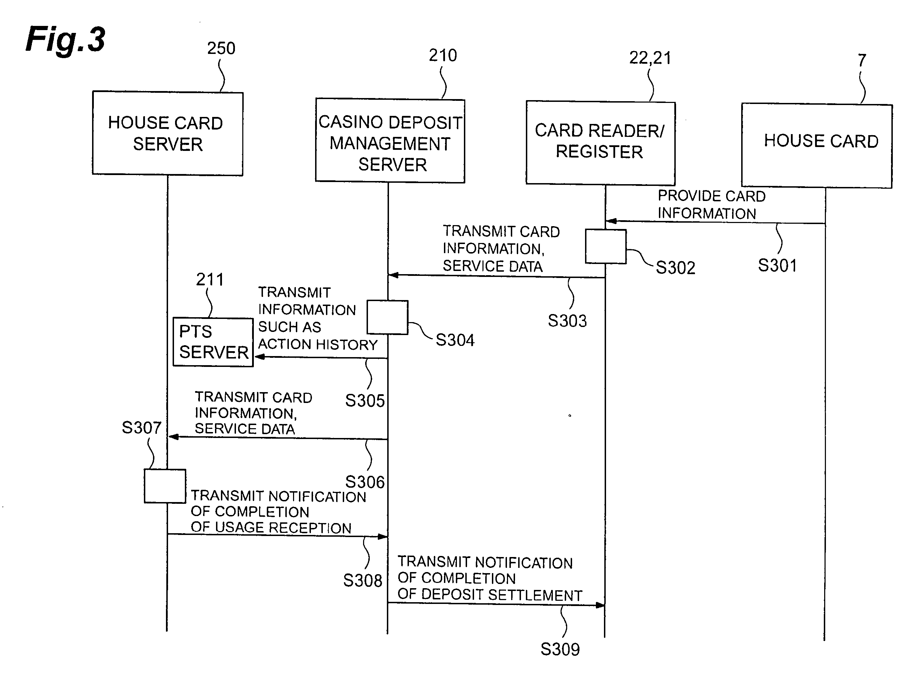

Next, an operating sequence performed when casino services are utilized under the management of the casino deposit management server 210 will be described. Fig. 3 is a sequence diagram showing an operating sequence performed when casino services are utilized under the management of the casino deposit management server 210.

First, the guest has his/her house card 7 read by the card readers 12, 22, 32, 61. As a result, the card information stored on the house card 7 is inputted into the card reader (step S301). Meanwhile, service data indicating the service usage amount used by the guest (user) are inputted into the registers 21, 31 or chip issuing/settlement device 60 (step S302). The register 21, 31 or chip issuing/settlement device 60 then transmits the card information received from the card reader and the service data to the casino deposit management server 210 via the communication network 100 as a deposit request (step S303).

Having received the deposit request, the casino deposit management server 210 checks whether or not the deposit request violates the predetermined deposit usage restriction conditions (step S304). If the casino deposit management server 210 determines that the deposit request violates the predetermined deposit usage restriction conditions, or in other words that the amount of money indicatedby the service data included in the deposit request exceeds the deposit balance, then the casino deposit management server 210 refuses the deposit request. In this case, the user may deposit additional money into the casino deposit using cash, a debit card, or a credit card.

If the deposit request does not violate the deposit usage restriction conditions, or in other words when the deposit request satisfies the deposit usage restriction conditions, the casino deposit management server 210 transmits this information to the PTS server 211 such that the action history, purchasing history, and so on of the user are recorded (step S305).

The casino deposit management server 210 also stores the received service data (step S304) in preparation for chip issuing requests from the chip issuing/settlement device 60. Further, the casino deposit management server 210 transmits the service data to the house card server 250 via the communication network 100 (step S306). The house card server 250 stores the received service data as a service usage amount (step S307). Thus the house card server 250 is prepared for fee settlement calculations performed during check-out and the like.

Following completion of step S307, the house card server 250 notifies the casino deposit management server 210 via the communication network 100 that usage reception is complete (step S308). Following notification that usage reception is complete, the casino deposit management server 210 notifies the register or chip issuing/settlement device 60 via the communication network 100 that settlement of the deposit is complete (step S309). As a result, the register 21, 31 or chip issuing/settlement device 60 performs display processing on a display or the like not shown in the drawings indicating that settlement of the deposit is complete. From this display, the guest is able to confirm that a payment has been made from the deposit.

### (Example of operations performed when chips are issued or a chip transaction is settled using the house card)

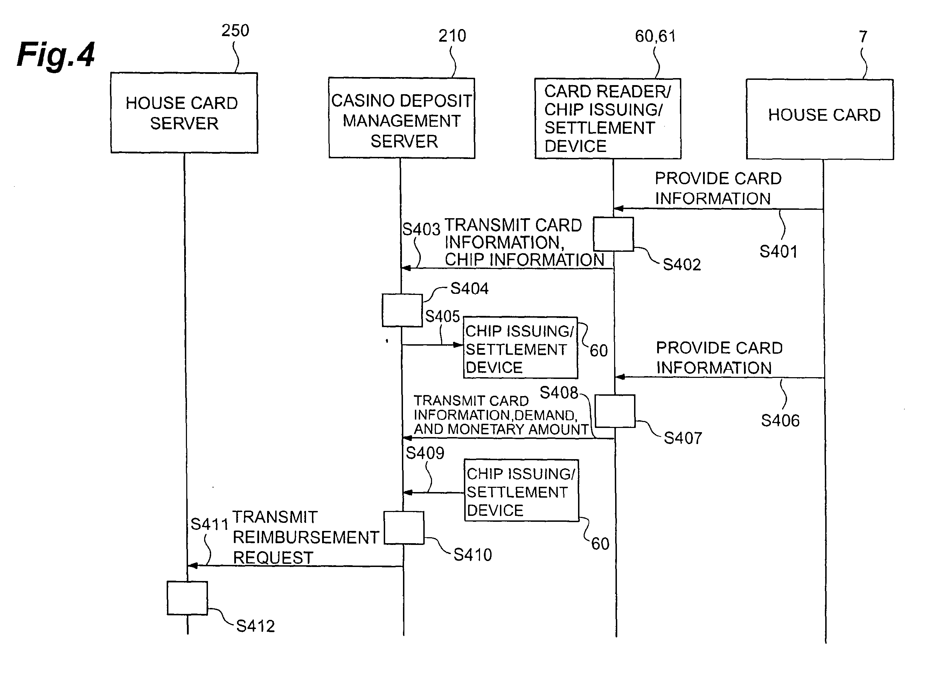

Next, an operating sequence performed when a user purchases chips in the casino or settles accounts for acquired or surplus chips will be described. Fig. 4 is a sequence diagram showing an operating sequence performed when chips are issued or a chip transaction is settled using the house card.

First, the operating sequence performed when a user purchases chips in the casino will be described. In the casino, the user has the card reader 61 read his/her house card 7 (step S401). Next, the user inputs the number of chips to be purchased or the amount of money required for the purchase into the chip issuing/settlement device 60 (step S402).

Meanwhile, the chip issuing/settlement device 60 receives the card information from the card reader 61, and transmits the card information together with information regarding the number of chips or monetary amount (to be referred to as "chip information" below) to the casino deposit management server 210 via the communication network 100 (step S403). Having received this information, the casino deposit management server 210 updates the deposit balance of the corresponding user by subtracting an amount corresponding to the number of chips or monetary amount indicated by the chip information from the deposit balance, and stores the updated deposit balance (step S404). The casino deposit management server 210 also inputs a command to the chip issuing/settlement device 60 to issue a number of chips corresponding to the requested number of chips or the monetary amount (step S405). The chip issuing/settlement device 60 issues chips in response to the inputted command.

Hence the user is able to purchase chips within the range of the amount of money in the deposit (deposit balance) using the house card 7. In the service payment system 300, the house card server 250 does not perform similar processing to that performed for hotel services in relation to the purchase of chips. Under the management of the casino deposit management server 210, the user is unable to purchase chips in excess of the deposit balance that is managed by the casino deposit management server 210.

Note that when chips are purchased, the casino deposit management server 210 maybe set so as to transmit the relevant information to the PTS server 211, whereby the action history, purchasing history, and so on of the user is stored.

Next, referring to Fig. 4, an operating sequence performed when the user settles a chip transaction will be described.

First, the user has his/her house card 7 read by the card reader 61 in the casino (step S406). Next, the user inputs a command into the chip issuing/settlement device 60 to have chips acquired in the casino deposited, receive reimbursement from the deposit, or similar (step S407).

Meanwhile, the chip issuing/settlement device 60 receives the card information from the card reader 61, and transmits the received card information together with information regarding the inputted command and monetary amount to the casino deposit management server 210 via the communication network 100 (step S408). Here, when chips are cashed and deposited into the deposit, information regarding the number of chips counted by the chip issuing/settlement device 60 or the amount of money corresponding to this number of chips (to be referred to as "cashing information" below) is transmitted from the chip issuing/settlement device 60 to the casino deposit management server 210 (step S409). Having received this information, the casino deposit management server 210 adds the number of chips or monetary amount corresponding to the cashing information to the deposit balance of the corresponding user, and stores this information (step S410).

When a request for reimbursement from a deposit (a reimbursement request) is inputted into the chip issuing/settlement device 60 by a user, the casino deposit management server 210 subtracts a monetary amount corresponding to the reimbursement request from the deposit balance of the guest specified by the card information, and updates the deposit balance by storing the deposit balance following the reimbursement (step S410). The casino deposit management server 210 notifies the house card server 250 to add the monetary amount corresponding to the reimbursement request (such that the monetary amount corresponding to the reimbursement request is subtracted from the charge when the account is settled) (step S411). The house card server 250 stores the monetary amount corresponding to the reimbursement request in the hotel account of the user (step S412).

Hence in the service payment system 300, service data are stored in the house card server 250, thus enabling payment to be performed for each casino service user. As a result, payment for hotel services and casino services in the hotel with a casino can be settled without cash.

The following effects are obtained according to the service payment system constituted as described above.

### (Hotel side)

As described above, according to the service payment system, cash transactions in a restaurant or casino within a hotel with a casino can be performed without cash, and hence the speed of the transaction canbe increased. Further, these transactions can be performed on a semi-unmannedbasis, thereby enabling a reduction in personnel expenditure. In particular, complete cashlessness enables a reduction in expenditure on finance-related personnel and an improvement in stability from money collection to transportation. Moreover, provision is made such that casino services can only be utilized within the range of a deposit balance inputted in advance as a casino deposit enabling use of casino services. Hence, trouble arising when the user is unable to pay the usage amount upon account settlement does not occur. Furthermore, personal expenditures on room service, mail-order, in shops, restaurants, casinos, and so on can be managed and analyzed.

By means of cashless and signature-less payment, account settlement canbe performed quickly and conveniently. This leads to an improvement in customer service, and for hotel account holders (members), the information stored on the house card (personal information, playing history, and self-analysis of preferences) may be used effectively to provide various detailed services.

Further, by developing an intranet casino within the hotel using a LAN, or connecting the account of a hotel account holder to the Internet, remote access is made possible, and thus an Internet casino with the casino in the hotel serving as croupier can be established and administered.

### (Guest side)

The hotel guest uses a single house card as a room key to lock a guest room and to make cashless payment for various services utilized inside the hotel. Hence in a hotel with a casino in which the service payment system 300 of this embodiment has been introduced, improvements in guest convenience can be made. Further, when casino services are utilized, the services may only be used within the range of a deposit balance inputted in advance as a casino deposit, thereby preventing unnecessary and excessive expenditure.

Further, house cards for utilizing various services are distributed to all guests, and hence usage restrictions may be set on the services. For example, restrictions may be placed on the content of services received by juveniles.

In the service payment system described above, the casino deposit is managed by the casino deposit management server 210, but the casino deposit may be stored on the house card such that the deposit balance is rewritable. In this case, the deposit balance is updated by a card reader in a location at which casino services are provided every time a game is played, for example, and the deposit balance is stored on the house card 7 and service data are outputted. The service data are then inputted by the house card server 250, for example. When it is detected by the card reader that the deposit balance has reached zero, the house card server 250 may restrict the provision of services.

According to the payment system of the present invention as described above, hotel services in a hotel and casino services in a casino can be integrated, whereby hotel guests and casino users can be provided with all of the services in the hotel and casino and utilized services can be paid for simply by carrying a single house card.

On the basis of the above descriptions, it is clear that the present invention may be implemented in various aspects and embodiments. Accordingly, the present invention may be implemented in other embodiments than the preferred embodiments described above within the scope of the following claims.

## Claims

1. A service payment system for making payment for services provided in a hotel in which a casino is installed, comprising:
house card issuing means for issuing a house card which stores user information enabling identification of a user of said services;
a house card server for instructing said house card issuing means to issue said house card; and
a service management server for utilizing said user information to manage a casino deposit which enables said user to utilize casino services upon acquirement of said house card, and for outputting service data indicating use of said casino services by said user when usage restriction conditions placed on said casino services are satisfied,
wherein said house card server stores the service data outputted from said service management server, thus enabling payment for said casino services to be performed individually for each said user.

2. The service payment system according to claim 1, wherein said service management server determines said usage restriction conditions according to the presence or absence of a deposit balance indicating the amount of money remaining in said casino deposit.

3. A service payment system for making payment for services provided in a hotel in which a casino is installed, comprising:
house card issuing means for issuing a house card which stores user information enabling identification of a user of said services and deposit data indicating a deposit which enables said user to utilize said services;
means which, when said user utilizes casino services, update said deposit data stored on said house card and output service data indicating use of said casino services by said user; and
a house card server which stores the service data outputted from said means, thus enabling payment for said casino services to be performed individually for each of said user.

4. The service payment system according to claim 3, further comprising means for restricting use of casino services by said user when a deposit balance indicating the amount of money remaining in said casino deposit has reached zero.
